# DEMANDE DE BREVET EUROPEEN

(11) **EP 1 139 148 A1**
(43) Date de publication de la demande: **04.10.2001**
(21) Numéro de dépôt: 00420063.0
(22) Date de dépôt: 31.03.2000
(51) Int. Cl.: G02C 5/22

(54) **Charnière élastique à frottement réduit**

(30) Priorité: 30.03.2000 FR 0004008
(71) Demandeur: SIPAL S.A., F-39400 Morez (FR)
(72) Inventeur: Kerjean, Alain, 39200 Saint-Claude (FR)
(74) Mandataire: Moinas, Michel

(57) **Abrégé**

Une charnière élastique de monture de lunettes comprend une tige (3) solidaire d'une branche de la monture, disposée dans un fourreau (5) et munie d'un charnon de tige (1) saillant hors du fourreau (5), et un organe élastique (17) contre la compression duquel le fourreau (5) se déplace en translation par rapport à la tige (3) et exerce une pression sur un charnon (7) solidaire d'une face de la monture lié au charnon de tige (1) par un axe de rotation (A).

Selon l'invention, la charnière comprend un moyen (13) de réduction du frottement entre la tige (3) et le fourreau (5) lors de leur déplacement relatif en translation. De préférence, ce moyen est aussi un moyen pour réduire le frottement entre le fourreau (5) et le charnon de face (7) lors de leur déplacement relatif en rotation

Selon un premier mode de réalisation de l'invention, le moyen comprend une douille (13) montée autour de la tige (3) et insérée dans un logement (19) du fourreau.

Selon un deuxième mode de réalisation de l'invention, ce moyen comprend un revêtement à la surface de la tige (3), du fourreau (5) ou du charnon de face (7).

## Description

L'invention se rapporte à une charnière élastique de monture de lunettes.

Plus particulièrement, l'invention se rapporte à une charnière élastique de monture de lunettes comprenant une tige solidaire d'une branche de la monture et disposée dans un fourreau. La tige est munie d'un charnon de tige saillant hors du fourreau. La charnière comprend également un organe élastique contre la compression duquel le fourreau se déplace en translation par rapport à la tige et exerce une pression sur un charnon solidaire d'une face de la monture lié au charnon de tige par un axe de rotation.

Une charnière élastique de ce type est connue notamment du document EP-A-0 856 763 publié le 5 août 1998. Lorsque la branche est actionnée en pivotement autour de l'axe de rotation, le fourreau pressé par le ressort contre le charnon de face a tendance à frotter contre ce dernier. Ce frottement est d'autant plus fort que le fourreau et le charnon de face sont constitués l'un et l'autre en titane, matériau aux propriétés mécaniques appréciées en lunetterie mais particulièrement grippant. Pour réduire ce frottement, la charnière comprend une plaquette montée autour de la tige et intercalée entre le fourreau et le charnon de face dont elle épouse la forme en came. Le matériau constitutif de la plaquette présente un faible coefficient de frottement vis-à-vis du fourreau et du charnon de face.

Lors du pivotement de la branche autour de l'axe de rotation, la forme en came du charnon de face entraîne un déplacement en translation du fourreau par rapport à la tige. On relève cependant que la plaquette décrite dans le document n'est pas conçue pour réduire le frottement pouvant exister entre le fourreau et la tige.

Le document EP-A-0 003 001 publié 11 juillet 1979 divulgue également une charnière élastique de monture de lunettes dans laquelle une plaquette recouvrant le charnon de face contribue à réduire le frottement d'un poussoir pressé contre ce dernier lors du pivotement de la branche autour de l'axe de rotation de la charnière.

Là encore, on observe que la plaquette n'est pas conçue pour réduire le frottement pouvant exister entre le poussoir et le fourreau, alors que la forme en came du charnon de face entraîne un déplacement en translation de l'un par rapport à l'autre.

Le but de l'invention est d'améliorer les charnières élastiques de monture de lunettes connues, par la réduction du frottement des pièces mobiles en rotation et en translation les unes par rapport aux autres. L'invention vise un moyen pour réduire le frottement entre la tige et le fourreau lors du pivotement de la branche autour de l'axe de rotation de la charnière, et de façon préférée, un moyen unique de réduire le frottement à la fois entre la tige et fourreau et entre le fourreau et le charnon de face. L'invention recherche encore un tel moyen aussi bien lorsque la branche pivote entre une position fermée et une position d'ouverture normale que lorsqu'elle est actionnée au-delà de sa position d'ouverture normale.

A cet effet, l'invention a pour objet une charnière élastique de monture de lunettes, comprenant une tige solidaire d'une branche de la monture, disposée dans un fourreau et munie d'un charnon de tige saillant hors du fourreau, et un organe élastique contre la compression duquel le fourreau se déplace en translation par rapport à la tige et exerce une pression sur un charnon solidaire d'une face de la monture lié au charnon de tige par un axe de rotation, caractérisée en ce qu'elle comprend un moyen pour réduire le frottement entre la tige et le fourreau lors de leur déplacement relatif en translation.

De préférence, ce moyen est conçu pour réduire le frottement à la fois entre la tige et le fourreau lors de leur déplacement relatif en translation et entre le fourreau et le charnon de face lors de leur déplacement relatif en rotation.

Selon un premier mode de réalisation de l'invention, ce moyen comprend une douille montée autour de la tige et insérée dans un logement du fourreau, la douille étant constituée d'un matériau à faible coefficient de frottement vis-à-vis du matériau constitutif de la tige ou du fourreau.

De préférence, la douille fait saillie par rapport au fourreau pour presser le charnon de face et est constituée d'un matériau à faible coefficient de frottement vis-à-vis du fourreau ou du charnon de face.

Selon un deuxième mode de réalisation de l'invention, ce moyen comprend un revêtement à la surface de la tige en contact avec le fourreau ou à la surface du fourreau en contact avec la tige pour réduire le frottement entre la tige et le fourreau.

De préférence, ce moyen comprend également un revêtement à la surface du fourreau en contact avec le charnon de face ou à la surface du charnon de face en contact avec le fourreau pour réduire le frottement entre le fourreau et le charnon de face.

Lorsque la tige, le fourreau ou le charnon de face est en titane ou en alliage de titane, on choisit, selon le premier mode de réalisation de l'invention, une douille en bronze ou en maillechort. D'une façon avantageuse, une douille en laiton permet d'obtenir une grande réduction du frottement. Selon le deuxième mode de réalisation, le revêtement comprend un dépôt obtenu par anodisation du titane ou par dépôt de nickel chargé en polytétrafluoréthylène. Il est prévu également que le revêtement comprenne une épaisseur même de la tige, du fourreau ou du charnon de face traitée en surface par nitruration ionique.

La compression de l'organe élastique met en oeuvre une butée de compression disposée entre la tige et le fourreau. D'une façon avantageuse, la butée de compression est constituée d'un matériau à faible coefficient de frottement vis-à-vis du matériau constitutif de la tige ou du fourreau. Avec cet agencement, la douille et la butée de compression permettent de réduire le frottement en deux régions de contact inévitable dans une charnière à fourreau se déplaçant en translation par rapport à une tige contre la compression d'un ressort. Autrement dit, on permet au fourreau de se déplacer relativement à la tige sans que ces deux pièces ne frottent directement l'une contre l'autre.

D'autres avantages de l'invention apparaîtront à la lecture de la description d'un mode de réalisation illustré par les dessins.

La figure 1 est une vue en coupe longitudinale d'une charnière selon l'invention en position d'ouverture normale.

La figure 2 est une vue correspondant à la figure 1 et montrant la branche en position d'ouverture au-delà de la position d'ouverture normale.

La figure 3 est une vue coupe longitudinale d'une variante de réalisation d'une charnière selon l'invention en position d'ouverture normale.

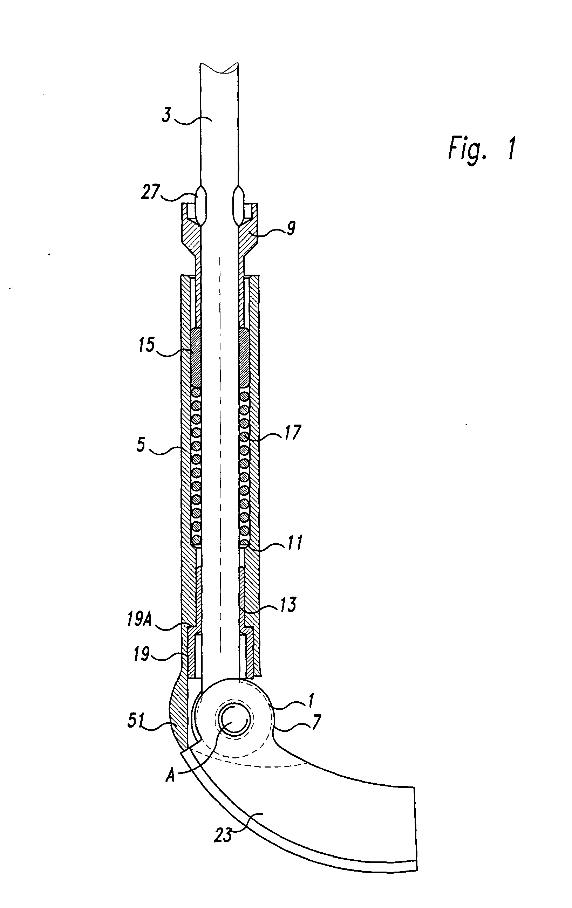

Une charnière élastique de monture de lunettes conforme à l'invention comprend, figure 1, une tige 3 disposée dans un fourreau 5. La tige 3 est solidaire d'une branche, non représentée, de la monture, et est munie d'un charnon de tige 1 saillant hors du fourreau 5. La charnière comprend également un organe élastique 17, ici un ressort, qui est monté autour de la tige 3 à l'intérieur du fourreau 5. Le ressort 17 est comprimé entre une butée de compression 15 disposée entre la tige et le fourreau et un décrochement intérieur 11 du fourreau 5. Un charnon 7 solidaire d'une face de la monture est lié au charnon de tige 1 par un axe de rotation A.

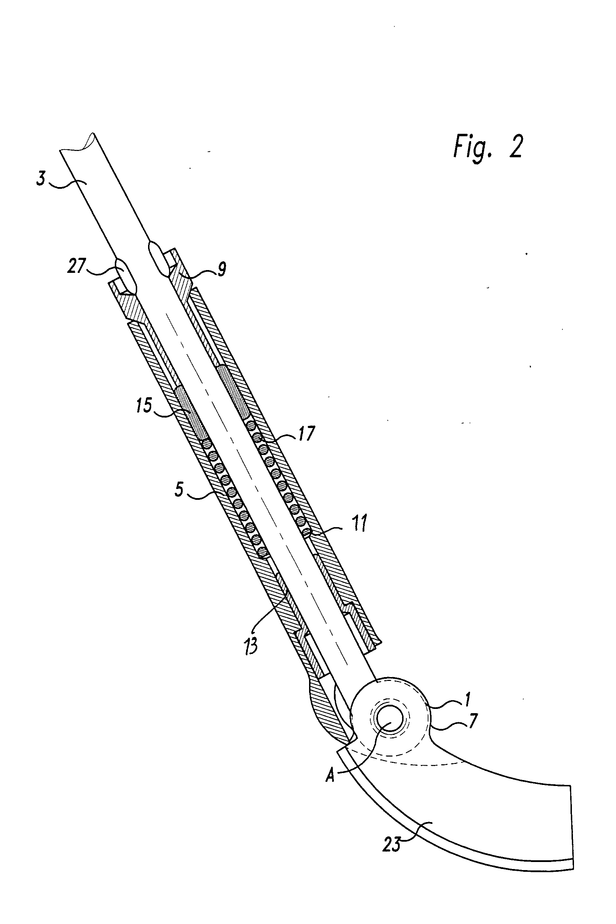

Le fourreau 5 exerce par l'intermédiaire du ressort 17 une pression sur le charnon de face 7. Cet agencement permet de maintenir par pré-tension un contact entre les deux pièces lors du pivotement de la branche autour de l'axe de rotation A. Sur la figure 1, la branche occupe une position d'ouverture normale, où une extrémité du fourreau 5 en forme de cuillère 51 est en appui contre un tenon 23 solidaire du charnon de face 7. Si l'on actionne la branche en pivotement au-delà de la position normale d'ouverture, la cuillère 51 prend appui contre le tenon 23 et entraîne un déplacement du fourreau 5 en translation par rapport à la tige 3 contre la compression du ressort 17 comme visible sur la figure 2. Cet agencement permet de rappeler la branche dans la position d'ouverture normale lorsque la sollicitation en pivotement est relâchée.

Selon l'invention, une douille 13 est montée autour de la tige 3 et insérée dans un logement 19 du fourreau 5. La douille 13 est constituée d'un matériau à faible coefficient de frottement vis-à-vis du matériau constitutif de la tige 3, du fourreau 5 ou du charnon de face 7. Lorsque la branche est actionnée au-delà de sa position d'ouverture normale, la douille insérée entre la tige 3 et le fourreau 5 réduit le frottement entre ces deux pièces déplacées en translation l'une par rapport à l'autre contre la compression du ressort 17.

De préférence, le logement présente un décrochement intérieur 19A tel que la douille fasse saillie par rapport à l'extrémité du fourreau pour presser par contact le charnon de face 7. Lors du pivotement de la branche entre la position d'ouverture normale et la position de fermeture, la douille 13 presse par contact le charnon de face 7 pour réduire le frottement entre ce dernier et le fourreau 5. La douille 13 constitue ainsi un moyen unique de réduire le frottement à la fois entre la tige 3 et le fourreau 5 lors de leur déplacement relatif en translation et entre le fourreau 5 et le charnon de face 7 lors de leur déplacement relatif en rotation.

Dans l'exemple des figures 1 et 2, le charnon de face 7 est circulaire. La branche pivote sans rappel élastique entre la position d'ouverture normale et une position de fermeture où elle est rabattue contre la face de la monture.

Il est prévu de concevoir un charnon de face en forme de came pour créer un rappel élastique de la branche vers la position de fermeture ou d'ouverture normale. Dans ce cas, le fourreau se déplace aussi en translation par rapport à la tige sous l'action de la came du charnon de face lors du pivotement de la branche entre la position d'ouverture normale et la position de fermeture. La douille 13 limite alors le frottement entre le fourreau 5 et le charnon de face 7 se déplaçant en rotation l'un par rapport à l'autre lorsque la branche pivote de la position de fermeture à la position d'ouverture normale, et limite le frottement entre le fourreau 5 et la tige 3 se déplaçant en translation l'un par rapport à l'autre lorsque la branche pivote de la position de fermeture à la position d'ouverture normale et au-delà de cette position d'ouverture normale.

Dans l'exemple des figures 1 et 2, la douille 13 est cylindrique et de section complémentaire de celle de la tige 3 et du fourreau 5. Si la tige et le fourreau sont conçus avec une autre section, par exemple rectangulaire, la douille 13 est elle aussi de section rectangulaire.

La douille 13 est de préférence en laiton. Ce matériau permet de réduire le coefficient de frottement entre la tige 3 et le fourreau 5, et entre le fourreau 5 et le charnon de face 7, lorsque ces trois pièces sont en titane. Une douille en bronze ou en maillechort est également concevable.

La butée de compression 15 du ressort 17 disposée entre la tige 3 et le fourreau 5 est avantageusement constituée d'un matériau à faible coefficient de frottement vis-à-vis du matériau constitutif de la tige ou du fourreau. Avec cet agencement, la douille 13 et la butée de compression 15 réduisent le frottement en deux régions de contact inévitable entre le fourreau 5 se déplaçant en translation par rapport à la tige 3 contre la compression du ressort 17.

Dans l'exemple des figures 1 et 2, la butée de compression 15 est solidaire en translation de la tige 3 par l'intermédiaire d'un manchon 9 bloqué par rapport à la tige par exemple par des ergots 27.

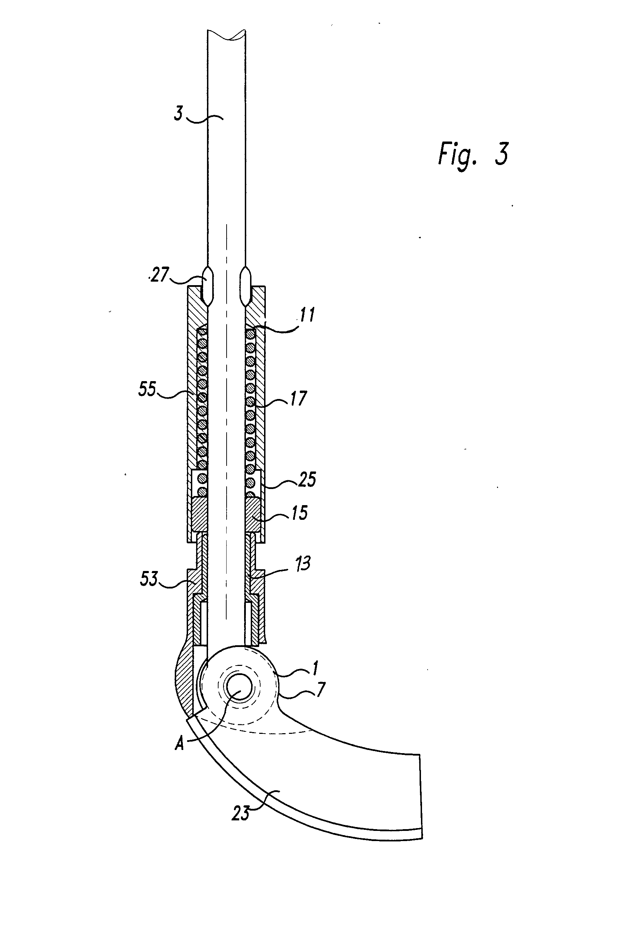

La figure 3 illustre une variante de réalisation d'une charnière selon l'invention, dans laquelle la butée de compression 15 est mobile en translation autour de la tige 3. Sur cette figure, un élément identique ou analogue à un élément des figures 1 et 2 est désigné par une même référence.

La tige 3 est disposée dans un fourreau constitué de deux parties coaxiales avant 53 et arrière 55. Le ressort 17 monté autour de la tige 3 est logé dans la partie arrière 55, où il est comprimé entre un décrochement intérieur 11 et une butée de compression 15 mobile en translation autour de la tige 3 dans un logement de guidage 25 formé à l'intérieur de la partie arrière 55. Celle-ci est bloquée en translation par rapport à la tige 3, par exemple par des ergots 27.

La partie avant 53 est mobile par rapport à la partie arrière 55 de façon telle que lorsqu'elle se déplace en translation par rapport à la tige 3 contre la compression du ressort 17, elle déplace la butée de compression 15 à l'intérieur du logement de guidage 25. Par cet agencement, la partie avant 53 exerce une pression de contact sur le charnon de face 7 en raison de la compression du ressort 17 et par l'intermédiaire de la butée de compression 15.

De même que dans l'exemple illustré par les figures 1 et 2, une douille 13 est montée autour de la tige 3 et insérée dans un logement 19 de la partie avant 53 du fourreau. Le logement 19 présente là encore un décrochement intérieur 19A de sorte que la douille fait saillie par rapport à l'extrémité de la partie avant 53 du fourreau pour presser par contact le charnon de face 7.

Comme indiqué précédemment, la douille 13 et la butée de compression 15 sont choisies pour réduire le frottement de la partie avant 53 du fourreau lors de son déplacement en translation respectivement par rapport à tige 3 et par rapport à la partie arrière 55 du fourreau. La douille 13 permet également de réduire le frottement de la partie avant 53 du fourreau lors de son déplacement en rotation par rapport au charnon de face 7.

La mise en place de la douille par insertion autour de la tige et à l'intérieur du fourreau contribue à la simplicité du montage de la charnière. Dans l'agencement général de la charnière, la douille est un moyen de réduction du frottement relativement discret. Les matériaux constitutifs comme le bronze, le maillechort ou le laiton sont peu coûteux.

Il est prévu de fabriquer un fourreau en acier inoxydable selon un procédé de moulage par injection de ce métal, connu en anglais sous l'abréviation de procédé MIM.

## Revendications

1. Charnière élastique de monture de lunettes, comprenant une tige (3) solidaire d'une branche de la monture, disposée dans un fourreau (5) et munie d'un charnon de tige (1) saillant hors du fourreau (5), et un organe élastique (17) contre la compression duquel le fourreau (5) se déplace en translation par rapport à la tige (3) et exerce une pression sur un charnon (7) solidaire d'une face de la monture lié au charnon de tige (1) par un axe de rotation (A), **caractérisée en ce qu'**elle comprend un moyen (13) de réduction du frottement entre la tige (3) et le fourreau (5,53) lors de leur déplacement relatif en translation.

2. Charnière élastique selon la revendication 1, **caractérisée en ce que** le moyen est aussi un moyen pour réduire le frottement entre le fourreau (5) et le charnon de face (7) lors de leur déplacement relatif en rotation.

3. Charnière élastique selon la revendication 1, **caractérisée en ce que** le moyen comprend une douille (13) montée autour de la tige (3) et insérée dans un logement (19) du fourreau.

4. Charnière élastique selon la revendication 1, **caractérisée en ce que** le moyen comprend un revêtement à la surface de la tige (3) en contact avec le fourreau (5) ou à la surface du fourreau (5) en contact avec la tige (3).

5. Charnière élastique selon les revendications 2 et 3, **caractérisée en ce que** la douille (13) fait saillie par rapport au fourreau (5) pour presser le charnon de face (7).

6. Charnière élastique selon les revendications 2 et 4, **caractérisée en ce que** le moyen comprend également un revêtement à la surface du fourreau (5) en contact avec le charnon de face (7), ou à la surface du charnon de face (7) en contact avec le fourreau (5).

7. Charnière élastique selon la revendication 1, **caractérisée en ce qu'**elle comprend une butée de compression (15) du ressort (17) bloquée en translation par rapport à la tige (3), ou mobile en translation autour de la tige (3) et se déplaçant dans un logement de guidage (25) d'une partie arrière (55) du fourreau (5) lorsqu'une partie avant (53) de ce dernier (5) se déplace en translation par rapport à la tige (3) contre la compression du ressort (17).

8. Charnière élastique selon la revendication 3, 5 ou 7, **caractérisée en ce** la douille (13) ou la butée de compression (15) est en bronze, en maillechort ou en laiton.

9. Charnière élastique selon la revendication 4 ou 6, **caractérisée en ce que** le revêtement comprend un dépôt obtenu par anodisation ou par dépôt de nickel chargé en polytétrafluoréthylène, ou comprend une épaisseur même de la tige (3), du fourreau (5) ou du charnon de face (7) traitée en surface par nitruration ionique.

10. Charnière élastique selon la revendication 1, 2 ou 7, **caractérisée en ce que** le charnon de tige (1) et le charnon de face (7) sont circulaires.

11. Charnière élastique selon la revendication 1, 2 ou 7, **caractérisée en ce que** le charnon de face (7) est conformé en came.
